# EUROPEAN PATENT APPLICATION

(11) **EP 0 829 830 A2**
(43) Date of publication of application: **18.03.1998**
(21) Application number: 97113847.4
(22) Date of filing: 11.08.1997
(51) Int. Cl.: G07F 7/08, G07F 19/00

(54) **Card medium for determining necessity of preforming identification, system therefor and method of processing said card**

(30) Priority: 14.08.1996 JP 214746/96
(71) Applicant: KABUSHIKI KAISHA TOSHIBA, Kawasaki-shi, Kanagawa-ken 210 (JP)
(72) Inventor: Hirokawa, Katsuhisa, c/o Kabushiki Kaisha Toshiba, Tokyo 105 (JP); Motai, Seizo, c/o Kabushiki Kaisha Toshiba, Tokyo 105 (JP); Tanaka, Youko, c/o Kabushiki Kaisha Toshiba, Tokyo 105 (JP)
(74) Representative: Blumbach, Kramer & Partner

(57) **Abstract**

A card medium having a function (52, 53, 54, 55, 56) for storing, in a storage region thereof, money value information which is loaded to the card medium (C) and predetermined conditions for determining whether or not identification of a user is necessary and a function for determining whether or not the identification of the user is necessary in accordance with the predetermined conditions, and a function (40, 50) for identifying the user when the determining function has determined that the identification is necessary.

## Description

The present invention relates to a card to which a value of money (abbreviated to a "value") is loaded to be used in a transaction, a card transaction system using the card, a method of loading the value to the card and a method of performing a transaction by using the card.

A card, for example, a prepaid card, of a type, to which the value of money (hereinafter simply called as a "value") has been loaded because of purchase or allowed credit, is not subjected to identification whether or not a person who uses the card is a valid user.

A card of the foregoing type is given a value by a method in which cash is paid to load the value or a method in which a credit card is used to load the value. When a credit card is used to load the value, the load must be approved by a credit-card-issuing company.

However, the fact that a card can be used without a necessity of identification of the user means a fact that a third person is able to unlawfully use the card. Therefore, load of a large amount of the value to the card raises a risk. Thus, the amount of the value permitted to be loaded at each requirement from the user must be restricted to a small amount. As a result, load must be performed frequently. Since each load must however be approved by the credit-card-issuing company, long time and a large cost (such as a communication cost, a commission and the so forth) for loading the value are required.

As described above, the fact that a credit card, which is used with the method such that the credit card is used to load a value of money, can be used without a necessity of identifying a person who intends to use the card means the fact the card can unlawfully be used by a third person. Therefore, load of a large amount of the value to the card raises a risk. Thus, the amount of the value permitted to be loaded at each requirement from the user must be restricted to a small amount. As a result, load must be performed frequently. Since each load must be approved by the credit-card-issuing company, long time and a large cost (such as a communication cost, a commission and the so forth) for loading the value are required.

An object of the present invention is to provide a card capable of simply and safely loading a value to the card and arranged to identify the transaction amount and the number of transactions and identify the user if necessary to enable a large value to safety be loaded to the card, a card transaction system, a card load method and a card transaction method.

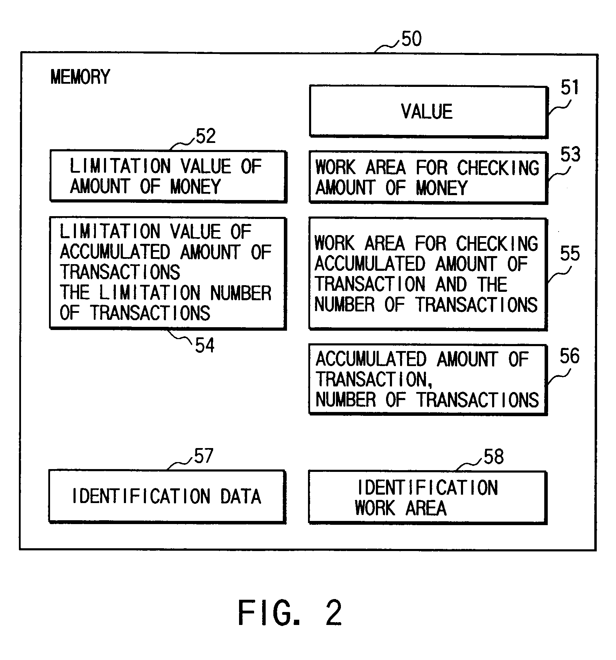

According to one aspect of the present invention, there is, as shown in FIG. 2, provided a card medium having storage means for storing money value information which is loaded to the card medium; determining means for storing predetermined conditions under which whether or not identification of a user is necessary is determined and determining whether or not the identification of the user is necessary in accordance with the predetermined conditions; and means for identifying the user when the determining means has determined that the identification is necessary.

According to the present invention, there is provided a card medium, such as a prepaid card, storing a value, permitted to be used without identification of a user and arranged to perform the identification under a predetermined condition. That is, the predetermined condition requires, for example, a procedure for identifying the user by, for example, a password, in only a case where money exceeding a predetermined amount is demanded to be used. Therefore, a card medium exhibiting both convenience and safety can be provided because it is free from the complicated process required for the conventional structure such that the user is always identified and overcoming unsatisfactory security occurring in a case of a card of a type with which identification is not performed.

According to the present invention, there is provided a system including a transaction computer for using the above-mentioned card, a value loading computer and the like.

Also the above-mentioned system is able to provide a card medium system capable of satisfying both convenience and safety as a result of a similar effect.

According to another aspect of the present invention, there is provided a method in which a value, a limitation value of amount of money, a limitation value of accumulated amount of transactions and a limitation number of transaction times are loaded to the above-mentioned card so as to identify the user to perform a transaction. Also the above-mentioned system is able to provide a card medium system capable of satisfying both convenience and safety.

The invention can be more fully understood from the following detailed description when taken in conjunction with the accompanying drawings, in which:
FIG. 1 is a block diagram shows the schematic structure of a value card system relating to a card transaction system according to present invention;
FIG. 2 is a diagram shows an example of data configuration in the memory 50 of the IC card C;
FIGS. 3A and 3B are timing charts show load of a value to the card;
FIG. 4 is a timing chart shows a transaction process;
FIG. 5 is a timing chart shows a transaction process; and
FIGS. 6A and 6B are timing charts show a transaction process.

An embodiment of the present invention will now be described with reference to the drawings.

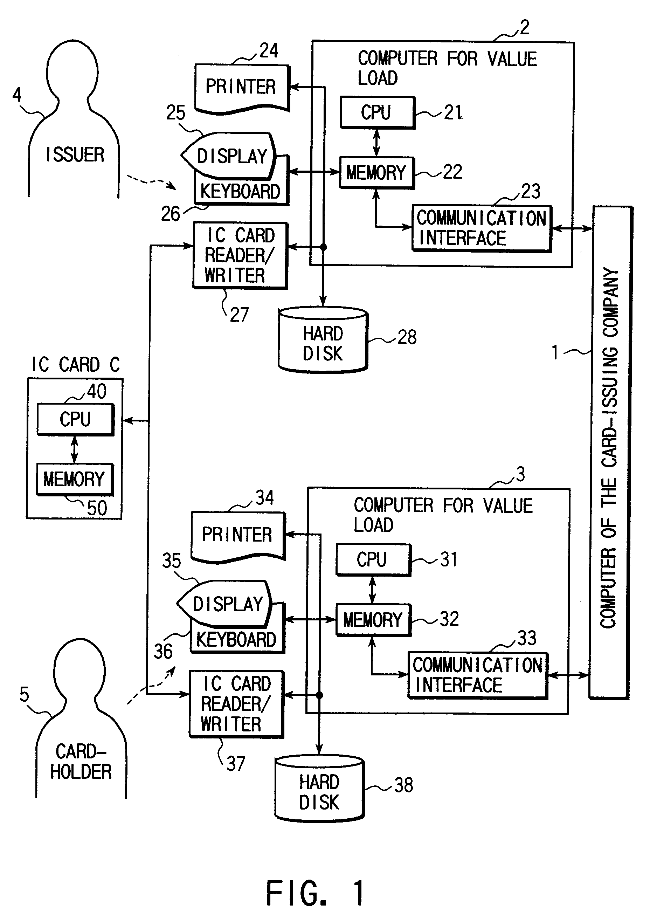

FIG. 1 shows the schematic structure of a value card system relating to a card transaction system according to the present invention. The value card system has a structure formed such that a plurality of computers 2 for value load, a plurality of computers 3 for transaction and a plurality of IC cards C exist with respect to one host computer 1 of the card issuing company comprising a computer and so forth.

The value card system is formed such that the IC card C is inserted into the computer 2 for value load to require the host computer 1 of the card issuing company to load the value. When the IC card C loaded with the value is inserted into the computer 3 for transaction, an off-line transaction starts. Data for use in the transaction is temporarily stored in the computer 3 for transaction, and then collectively transmitted to the host computer 1 of the card issuing company at an adequate timing.

The computer 2 for value load comprises a CPU 21, a memory 22, a communication interface 23, a printer 24, a display unit 25, a keyboard 26, an IC card reader/writer 27 and a hard disk 28. An issuer 4 performs the value loading operation by mainly using the keyboard 26.

The CPU 21 controls the foregoing units to send/receive data to and from the IC card C, check data and instruct writing of the value on the IC card C and so forth. The memory 22 is a storage means for storing various data items.

The communication interface (a transmission means) 23 transfers, to and from the host computer 1 of the card issuing company, data of an inquiry whether or not credit is given to a user who is requiring load and data of the value to be transferred, and then supplies data to the memory 22. The printer 24 outputs a certificate when the load process is completed. The display unit 25 displays a message and the like relating to the load process. The keyboard 26 is an input means with which the issuer 4 who performs the load process inputs data of the load.

The IC card reader/writer 27 reads data in the IC card C inserted by the person who requires the load and writes the value on the IC card C. The magnetic disk 28 has software, data and so forth stored therein and required to perform the load process.

The computer 3 for transaction comprises a CPU 31, a memory 32, a communication interface 33, a printer 34, a display unit 35, a keyboard 36, an IC card reader/writer 37 and a magnetic disk 38.

The CPU 31 controls each unit, sends/receives data to and from the IC card C and issues an instruction to subtract the value from the IC card C. The memory 22 is a storage means for storing various data items.

The communication interface (a transmission means) 33 sends/receives transaction data and the like to and from the host computer 1 of the card issuing company so as to transfer data above to the memory 32. The printer 34 outputs a certification when a transaction has been completed. The display unit 35 displays a message or the like relating to the transaction process. The keyboard 36 is used by the cardholder 5 who performs the transaction by inputting data required for the transaction.

The IC card reader/writer 37 is a means for receiving the IC card C inserted by the cardholder 5 who requires the transaction so as to read data from the IC card C and subtracts the value from which IC and C. The magnetic disk 38 has, stored therein, software, data and the like required to perform the transaction process. The magnetic disk 38 is as well as used to store data about a transaction, stored data being collectively transferred to the host computer 1 of the card issuing company at an adequate timing.

The chip of the IC card C has a CPU 40 and a memory 50 which serves as a storage means. The CPU 40 sends/receives data and commands to and from the IC card readers/writers 27 and 37, checks data, for example, such that data in the memory 50 and received data are subjected to a comparison, and issues an instruction to update data in the memory 50.

FIG. 2 shows an example of data configuration in the memory 50 of the IC card C. The memory 50 has an area for storing a value, an area for storing data for use to determine whether or not identification of the user is required and an area for identifying the validity of the user when identification of the user is performed. As an area 51 for storing the value, a value 51 indicating the value of money stored in the card is provided. When the value is loaded, the value is written on the area. When a transaction is performed, a value is subtracted from the area.

As an area for storing data for use to determine the necessity of identifying the user when a transaction is performed, there are formed a limitation value 52 of the amount of money indicating the amount of money permitted to be transacted without identification of the user, a work area 53 for checking the amount of money such that the amount of money for the transaction transferred from the computer 3 for transaction is stored, data 54 of the limitation value of accumulated amount of transactions and the limitation number of transaction times which are the amount of transactions permitted to be performed without identification of the user and the accumulated amount of the number of transactions, data 56 of accumulated amount of transaction and number of transactions which are the amount of money and the number of transaction performed without identification of the user after the final identification of the user has been performed and a work area 55 for checking the accumulated amount of transaction and the number of made transactions for storing an amount of money obtained by adding data 56 of accumulated amount of transaction and number of transactions to a present amount of transaction transferred from the computer 3 for transaction.

As an area for judging the validity of the user when the user is identified, there are provided identification data 57 formed by embedding data, for example, PIN (Personal Identification Number), biometrics data or the like; and an identification work area 58 for storing data input when the user has been identified.

Among the above-mentioned areas, the value 51, the work area 53 for checking the amount of money, the work area 55 for checking the accumulated amount of transaction and the number of performed transactions and data 56 of accumulated amount of transaction and number of transactions are updated whenever a transaction or load is performed. On the other hand, data of limitation value area 52 of the amount of money and data 54 of the limitation value of accumulated amount of transactions and the limitation number of transaction times area 56 are located when a card is issued by the card issuer company. Identification data 57 is set by the owner of the card when the card is issued and usually formed into a code so as to be stored. The identification work area 58 stores data input when the identification of the user has been performed.

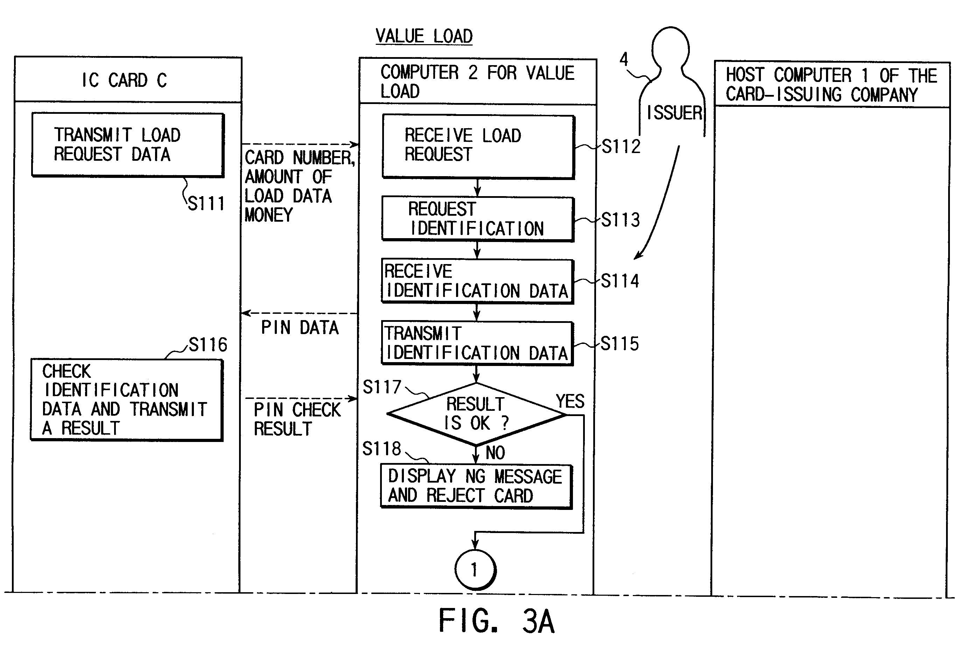

The operation of the value card having the above-mentioned structure will now be described with reference to a timing chart shown in FIGS. 3A to 6B.

The process according to the present invention is mainly sectioned into (1) a process for loading a value to the card; and (2) a transaction process for using the card to which the value has been loaded. The transaction process (2) is sectioned into (1) a process for determining the necessity whether or not the user to be identified, (2) a process for requiring the identification of the user if necessary so as to check the user and (3) a process for performing a transaction.

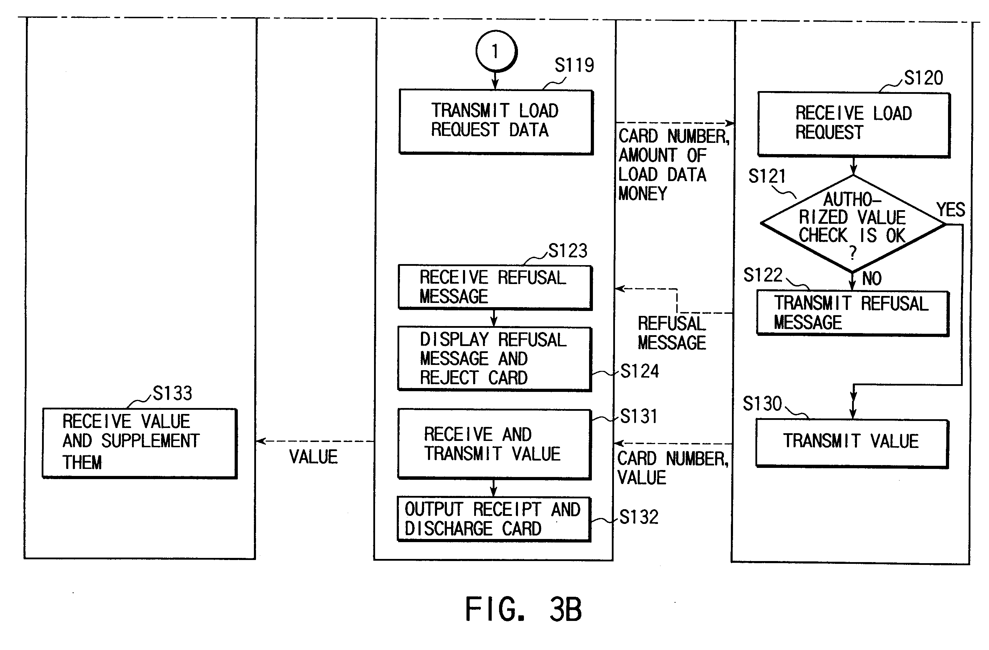

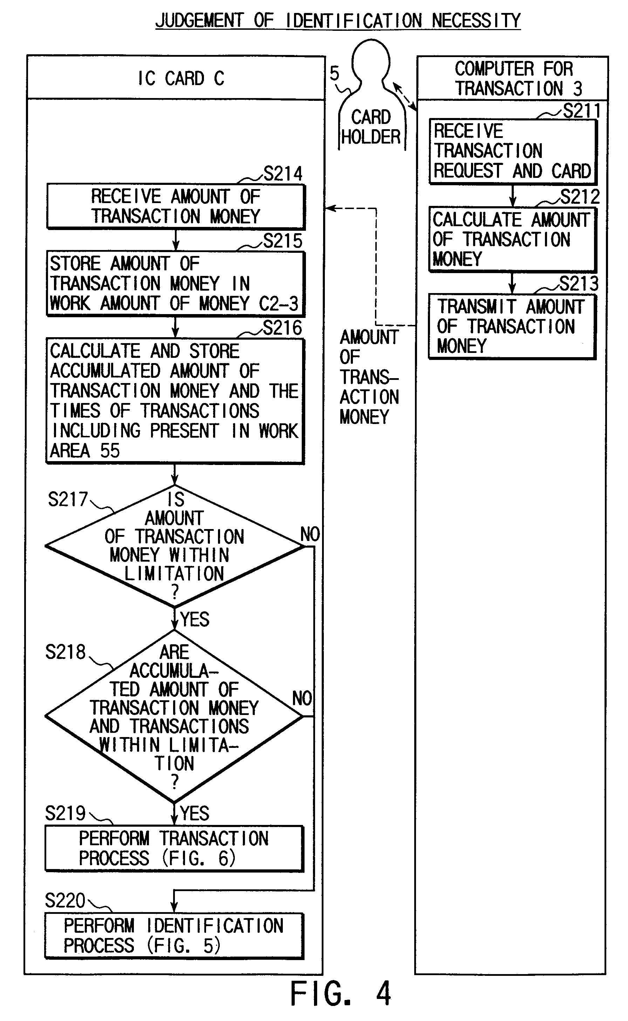

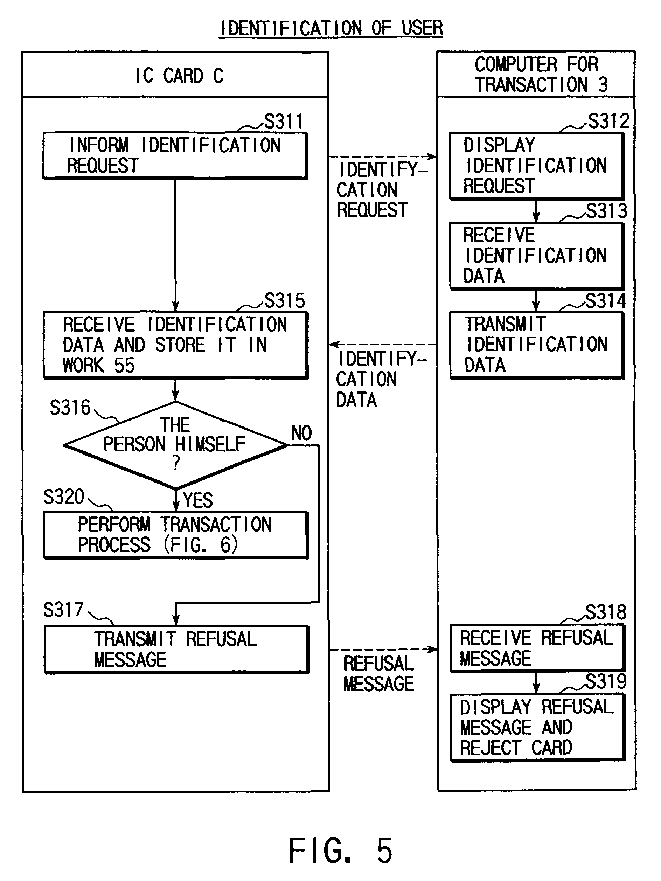

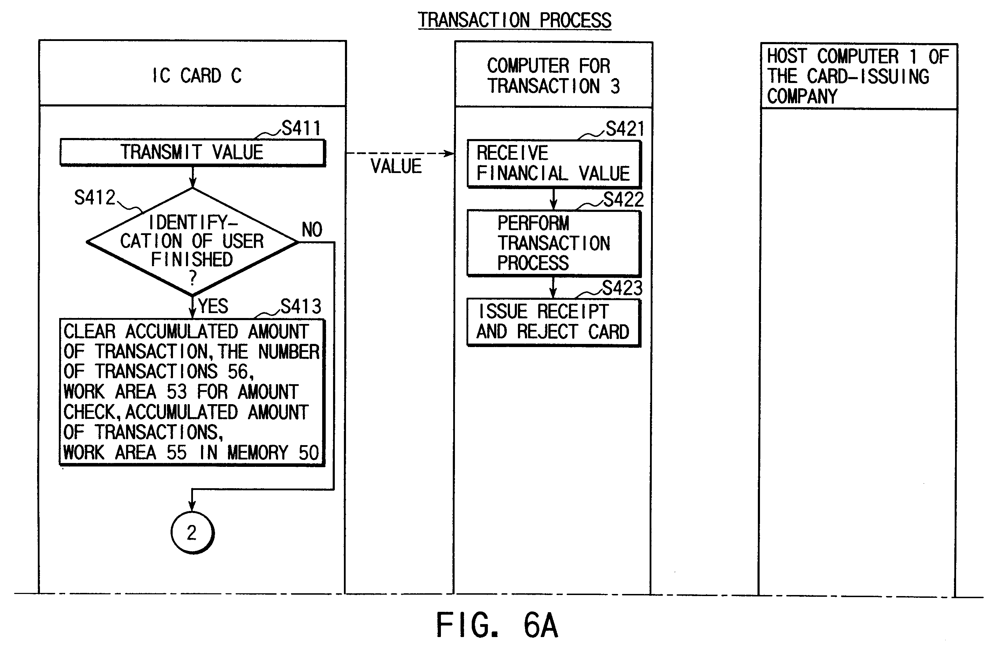

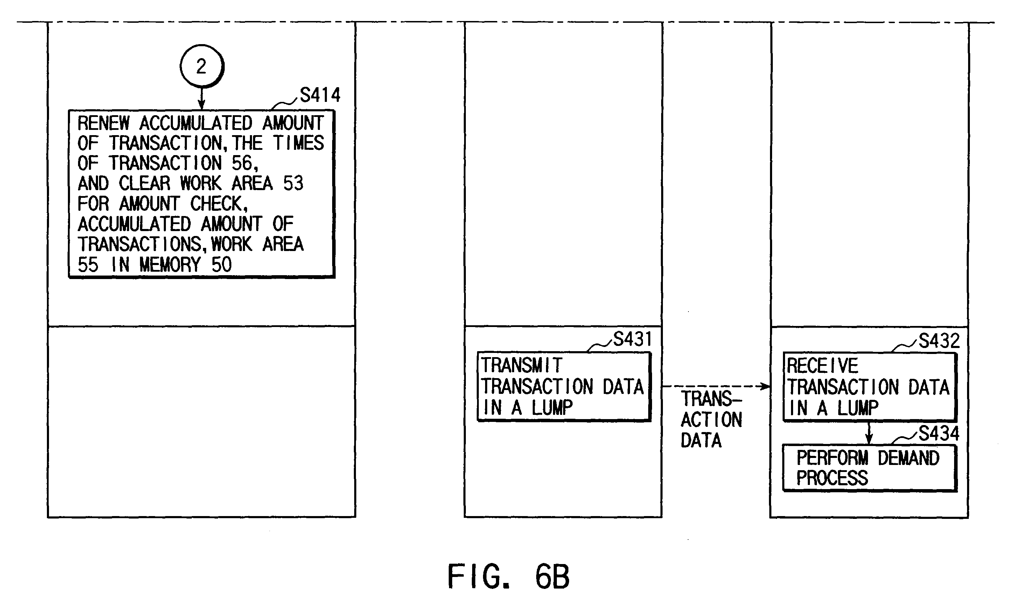

Among the above-mentioned processes, FIGS. 3A and 3B show load of a value to the card, FIG. 4 shows a transaction process (judgment whether or not identification of the user is required), FIG. 5 shows a "transaction process (identification of the user) and FIGS. 6A and 6B show a transaction process (transaction).

FIGS. 3A and 3B are timing charts showing a process for loading a value to the card. In this process, the IC card C, the computer 2 for value load and the host computer 1 of the card issuing company perform the load process.

Referring to the timing chart shown in FIGS. 3A and 3B, when the IC card C has been inserted into the computer 2 for value load, the IC card C transmits, to the computer 2 for value load, data for requiring load (S111). Data to be transmitted is data about the card number and the amount of money. The amount of money may be input manually by using the keyboard 26 of the computer 2 for value load.

Then, the computer 2 for value load performs the process such that the computer 2 for value load receives data for requiring load (S112), and then requires identification of the user (S113). When the computer 2 for value load has received identification data from the issuer 4 through, for example, the keyboard 26 (S114), the computer 2 for value load transmits identification data to the IC card C (S115).

The IC card, which has received identification data, checks identification data, and then transmits a result (S116). The identification is performed by a method which is the same as the identification to be described later, which is performed in the transaction (identification).

The computer 2 for value load, which has received the result of the identification, checks the result (S117). If the result of the check is invalid (NG), the computer 2 for value load displays an NG message on the display unit 25 (S118), and then discharges the IC card C. Thus, the process is interrupted. If the result of the check is valid (OK), the computer 2 for value load transfers data for requiring load to the host computer 1 of the card issuing company (S119).

The host computer 1 of the card issuing company, which has received data for requiring load, performs credit check in accordance with the card number, that is, checks whether the card having the card number above is not a stolen card, a lost card or a lapse card. If the card is a valid card, the host computer 1 of the card issuing company checks whether or not the required value is larger than a credited limitation value (S121). If the value is larger than the credited limitation value (that is, in an NG case), the host computer 1 of the card issuing company transmits a refusal message to the computer 2 for value load (S122). If the value is not more than the credited limitation value (that is, in an OK case), the host computer 1 of the card issuing company transmits, to the computer 2 for value load, the limitation value of the amount of money, and the limitation value of accumulated amount of transactions (S130).

If the refusal message has been transmitted from the card issuing company (S123), the computer 2 for value load displays the refusal message on the display unit 25, and then ejects the IC card C to interrupt the process (S124).

When the computer 2 for value load has received the value transmitted from the host computer 1 of the card issuing company, the computer 2 for value load transfers the value (S131). Then, the printer 24 outputs a receipt and the IC card C to interrupt the process (S132).

The IC card C, which has received the value loads the value, into the value 51 in the memory 50 (S133).

FIG. 4 is a timing chart showing a process in the transaction process for determining whether or not judgment of the user is necessary. In this process, the IC card C and the computer 3 for transaction perform the process.

When a requirement for the transaction has been communicated to the computer 3 for transaction (S211) and the IC card C has been inserted into the same, the computer 3 for transaction calculates the transaction money (S212). The calculation may be performed such that the value of the merchandise required to be transacted is detected from merchandise data stored in the magnetic disk 38 to calculate the total or calculate total input from an input device, such as the keyboard 36. After the amount of the transaction has been calculated, the amount of the transaction is transmitted to the IC card C (S213).

The IC card C receives the amount of the transaction (S214), and then stores the amount of the transaction in the work area 53 for checking the amount of money in the memory 50 (S215) so as to store, in the work area 55 for checking the accumulated amount of transaction and the number of made transactions in the memory 50, the amount of the transaction and a value obtained by adding the amount of the transaction and the accumulated amount of transaction and number of transactions (S216).

Moreover, the amount of the transaction is checked in the IC card C (S217). That is, the IC card C subjects the limitation value 52 of the amount of money (an upper limit of the transaction amount permitted for one transaction without identification) previously set by the card issuing company and stored in the memory 50 and the amount of money stored in the work area 53 for checking the amount of money to a comparison (S215) so as to check whether or not the present transaction exceeds the limitation.

If the amount of the transaction is not larger than the limitation value, the limitation value of the accumulated amount of transactions and the limitation number of transaction times are checked (S218). That is, the IC card C subjects data 54 of the limitation value of accumulated amount of transactions and the limitation number of transaction times (the limitation value of the number of accumulated transaction times permitted without identification) previously set by the card issuing company and stored in the memory 50 and the work area 55 for checking the accumulated amount of transaction and the number of made transactions calculated and stored in step 216 to a comparison so as to check whether or not the limitation value of accumulated amount of transactions and the limitation number of transaction times do not limitation values.

If the amount of the transaction is not larger than the limitation value, the process proceeds to an actual transaction process, as shown in FIGS. 6A and 6B (S219). If the amount of the transaction exceeds in either in step 217 or step S218, the identification is necessary. Thus, identification is performed as shown in a timing chart shown in FIG. 5 (S220).

FIG. 5 is a timing chart showing an identification process among the transaction process. In this case, the IC card C and the computer 3 for transaction perform the process.

The IC card C transmits a requirement for identification to the computer 3 for transaction (S311).

The computer 3 for transaction, which has received the requirement for the identification, displays a message of the requirement for the identification on the display unit 35 (S312). When the computer 3 for transaction has received data for the identification input by using the keyboard 36 (S313), the computer 3 for transaction transmits identification data to the IC card C.

The IC card C, which has received identification data, stores supplied data in the identification work area 58 in the memory 50 (S315) so as to check identification data (S316). That is, the IC card C subjects the identification work area 58 stored in step 315 and identification data 57 set by the owner of the IC card C to a comparison so as to check whether or not the person who is performing the transaction is a valid owner.

If the person, who is performing the transaction, is a valid owner of the IC card C (in an OK case), the process proceeds to a transaction process shown in FIGS. 6A and 6B (S320). If identification cannot be performed (in an NG case), a refusal message is transmitted to the computer 3 for transaction (S317).

The computer 3 for transaction, which has received the refusal message (S318), displays the refusal message on the display unit 35 (S319) and discharges the IC card C to interrupt the process.

FIGS. 6A and 6B are timing charts showing a transaction process in the transaction. The IC card C, the computer 3 for transaction and the host computer 1 of the card issuing company perform the process.

Referring to FIGS. 6A and 6B, the IC card C transmits the value to the computer 3 for transaction (S411), that is, subtracts the value of the value 51 in the memory 50 by the degree corresponding to the transaction, and then transmits the value obtained by the subtraction.

Then, whether or not identification has been performed in the transaction is checked (S412). If the identification is performed in the transaction, the IC card C clears data 56 of accumulated amount of transaction and number of transactions, the work area 53 for checking the amount of money and the work area 55 for checking the accumulated amount of transaction and the number of performed transactions in the memory 50 (S413).

If the identification is not performed in the transaction, data 56 of accumulated amount of transaction and number of transactions in the memory 50 is updated to a value obtained by adding the present amount of transaction and the number of transactions (one) to data 56 of accumulated amount of transaction and number of transactions. Moreover, the work area 53 for checking the amount of money and the work area 55 for checking the accumulated amount of transaction and the number of made transactions are cleared (S414).

In step 421 the computer 3 for transaction receives the value, and then performs a transaction process (S422). That is, the computer 3 for transaction generates transaction data so as to store it in the magnetic disk 38, and then performs ordering of the subject merchandise and the like. Then, a receipt is issued from the printer 34, and then the IC card C is ejected to complete the transaction (S423).

Then, transaction data is collectively transmitted to the host computer 1 of the card issuing company by the computer 3 for transaction at a predetermined timing or in accordance with an instruction issued from an operator (S431).

The host computer 1 of the card issuing company, which has received transaction data in step 432, performs a demand process (S434).

As described above, according to the embodiment of the present invention, even if the card is owned by a third person due to loss or theft, the third person cannot pay in an amount exceeding a predetermined money. Therefore, the security can be improved.

Since excellent security can be implemented, a large amount of a value can safely be provided for the card and the number of load times can be reduced. Therefore, the convenience can be improved. Since the number of load times can be reduced, the number credit inquiry times can be reduced. As a result, the communication cost and the commission can be reduced.

Information about the conditions, such as the limitation amount and the number of made transactions, is an example of the present invention. Even if the foregoing condition is employed solely or a plurality of other conditions are added, the operation and effect of the present invention can, of course, be obtained.

As described above, according to the present invention, there are provide a card for which a large amount of money value can safely be provided so that the number of load times is reduced and the communication cost is reduced, a card transaction system and a card transaction method.

## Claims

1. A card medium characterized by comprising:
means (51) for storing money value information which is loaded to the card medium (C);
determining means (52, 53, 54, 55, 56) for storing predetermined conditions and determining whether or not the identification of a user of the card medium is necessary in accordance with the predetermined conditions; and
means (40, 50) for identifying the user when the determining means has determined that the identification is necessary.

2. A card medium according to claim 1, characterized in that the determining means includes
means (52) for storing a limitation value of money permitted in one transaction in accordance with money value information: and
means (53, 40, 50) for determining that identification of the user is necessary when the user has demanded to perform a transaction with the card in an amount exceeding the limitation value of money.

3. A card medium according to claim 1, characterized in that the determining means includes
means (54) for storing a limitation number of accumulated transaction times performed plural times in accordance with the money value information; and
means (53, 40, 50) for determining that identification of the user is necessary when the user has demanded to perform a transaction with the card in exceeding the limitation number.

4. A card medium according to claim 3, characterized by further comprising:
means for storing a transaction accumulated amount of the transaction operations which were performed plural times; and
means for erasing the transaction accumulated amount when the determining means has determined the identification is necessary and the identification of the user has been performed.

5. A card medium according to claim 1, characterized in that the determining means includes
means (54) for storing a limitation number of accumulated transaction times performed plural times in accordance with the money value information; and
means (40, 50, 53) for determining that identification of the user is necessary when the user has demanded to perform a transaction with the card in exceeding the limitation number of the accumulated transaction times.

6. A card medium according to claim 1, characterized in that the determining means includes
means (52, 54) for storing a limitation value of amount of money permitted in one transaction in accordance with money value information, a limitation value of accumulated amount of transactions performed plural times in accordance with money value information and a limitation number of transaction times performed plural times in accordance with money value information; and
means (40, 50, 53) for determining that identification of the user is necessary when the user has demanded to perform a transaction with the card in exceeding any one of the limitation value of money, the limitation value of accumulated amount of transactions and the limitation number of transaction times.

7. A card medium according to claim 6, characterized by further comprising:
means for storing an accumulated number of the transaction times which were performed plural times; and
means for erasing the accumulated number of the transaction times when the determining means has determined the identification is necessary and the identification has been performed.

8. A card system comprising:
a card medium (C) including
means (51) for storing money value information which is loaded to the card medium,
determining means (52, 53, 54, 55, 56) for storing predetermined conditions under which whether or not identification of a user is necessary is determined and determining whether or not the identification of the user is necessary in accordance with the predetermined conditions, and
means (40, 50) for identifying the user when the determining means has determined that the identification is necessary;
a computer including
means (37) for holding the card medium to read/write data to and from the card medium;
means (36) for inputting a signal when the means is operated by the user;
means (31, 32) for supplying the signal input by the user to the card medium through the input means when the determining means performs determination and when the identification means performs identification; and
means (31, 32) for performing a transaction process in accordance with money value information when the means is operated by the user when the determining means has determined that the identification is not performed or when the identification means has determined that the user is a valid user.

9. A card medium system according to claim 8, characterized in that the determining means includes
means (52) for storing a limitation value of money permitted in one transaction in accordance with money value information: and
means (53, 40, 50) for determining that identification of the user is necessary when the user has demanded to perform a transaction with the card in an amount exceeding the limitation value of money.

10. A card system according to claim 8, characterized in that the determining means includes
means (52, 54) for storing a limitation value of amount of money permitted in one transaction in accordance with money value information, a limitation value of accumulated amount of transactions performed plural times in accordance with money value information and a limitation number of transaction times performed plural times in accordance with money value information; and
means (40, 50, 53) for determining that identification of the user is necessary when the user has demanded to perform a transaction with the card in exceeding any one of the limitation value of money, the limitation value of accumulated amount of transactions and the limitation number of transaction times.

11. A card medium system according to claim 8, characterized by further comprising:
a second computer (2) for holding the card medium and having means (52, 54) for storing, in a storage region of the determining means, at least any one of a limitation value of amount of money permitted in one transaction in accordance with money value information, a limitation value of accumulated amount of transactions performed plural times in accordance with money value information and a limitation number of transaction times performed plural times in accordance with money value information to correspond to an operation performed by an operator (4).

12. A card medium system according to claim 8, characterized by further comprising:
a host computer (1) connected to the computer (3) and arranged to receive transaction data from the computer so as to perform a process relating to a demand process.

13. A data processing method of a card medium system comprising the step of:
writing (S131 to S133), on a storage region (50) of the card medium (C), money value information (51) and predetermined conditions (52, 54) for determining whether identification of a user who demand to transact with the card medium is necessary or not.

14. A data processing method according to claim 13, characterized in that the writing step includes
a step (S214 to S217, S220) of requiring identification of the user when the user demands a transaction with the card medium under a condition which does not satisfy the predetermined conditions.

15. A data processing method according to claim 13, characterized in that the writing step includes
a step (S133) of writing a limitation value of money permitted in one transaction in accordance with money value information; and
a step (S214 to S220) of requiring identification of the user when the user demands to perform a transaction with the card medium in exceeding the limitation value of the money.

16. A data processing method according to claim 13, characterized in that the writing step includes
a step (S133) of writing, on the storage region, a limitation value of amount of money permitted in one transaction in accordance with money value information, a limitation value of accumulated amount of transactions performed plural times in accordance with money value information and a limitation number of transaction times performed plural times in accordance with money value information; and
a step (S214 to S220) of requiring identification of the user when the user has demanded to perform a transaction with the card in exceeding any one of the limitation value of money, the limitation value of accumulated amount of transactions and the limitation number of transaction times.
